Europäisches Patentamt

European Patent Office

Office européen des brevets

(19)

(11) Publication number : **0 585 117 A1**

(12) **EUROPEAN PATENT APPLICATION**

(21) Application number : 93306752.2

(22) Date of filing : 25.08.93

(51) Int. Cl.⁵ : **G06F 12/08**

(30) Priority : 26.08.92 US 935564

(43) Date of publication of application :
02.03.94 Bulletin 94/09

(84) Designated Contracting States :
CH DE ES FR GB IE IT LI NL

(71) Applicant : CYRIX CORPORATION
2703 N. Central Expressway
Richardson, Texas 75080 (US)

(72) Inventor : Selgas, Thomas D.
102 Rocky Pointe Ct.
Garland, Texas 75044 (US)
Inventor : Brightman, Thomas B.
8340 Greenwood Drive
Niwot, Colorado 80503 (US)
Inventor : Patton, William C.
6801 Wickliff Trail
Plano, Texas 75023 (US)

(74) Representative : Harris, Ian Richard et al
c/o D. Young & Co., 21 New Fetter Lane
London EC4A 1DA (GB)

(54) **Method and system for maintaining cache coherency in a multi-master computer system.**

(57) A method of data communication between asynchronous processes of a computer system is disclosed in connection with a cache coherency system for a processor-cache used in a multi-master computer system in which bus arbitration signals either are not available to the processor-cache, or are not exclusively relied on by the processor-cache to assure validity of the data in the cache (e.g., a 386-bus compatible computer system using an external secondary cache in which bus arbitration signals are only connected to and used by the secondary cache controller). In an exemplary external-chip implementation, the cache coherency system (120) is implemented using programmable logic (122, 124) which is connected to (a) receive selected bus cycle definition and control signals from a microprocessor (110), (b) detect FLUSH (cache invalidation) conditions, i.e., bus master synchronization events, and for each such FLUSH condition, (c) provide a FLUSH output signal to the microprocessor with the appropriate set up and hold time. Exemplary bus master synchronization events, or FLUSH conditions, that cause cache invalidation are : (a) hardware generated interrupts to the microprocessor or, (b) read or read/write accesses by the microprocessor to I/O address space, except for those directed to a hard disk or an external coprocessor. If the bus architecture uses memory-mapped I/O, accesses by the microprocessor to selected regions of memory-mapped I/O space could also be used. The cache coherency functionality could alternatively be implemented on-board the microprocessor chip.

FIG. 3

The invention relates generally to data communication between asynchronous processes of a computer system so as to assure the validity of data in process-local buffers (such as caches).

More particularly, the invention finds application in computer architectures using cache memory, and even more particularly in a cache coherency system for a processor-cache combination, where the processor-cache is used in a multi-master computer system in which bus arbitration signals either are not available to the processor-cache, or are not exclusively relied on by the processor-cache to assure validity of the data in the cache.

In one application of the invention, the cache coherency system is implemented for a 386-bus compatible microprocessor design that incorporates an internal write-through cache, but which is used in a multi-master computer system that does not provide to the microprocessor (i.e. the processor-cache) bus master arbitration signals.

Cache memory is commonly used to improve performance in a computer system which can be generally described as including a central processing unit (CPU), such as a microprocessor chip, memory subsystem, bus control logic, and other supporting logic. The cache may be located either external or internal to the CPU, and together with the main memory, forms the memory hierarchy of the computer system.

In a multi-master computer system, main memory may be accessed by bus masters other than the CPU, including DMA devices and microcontrollers (as well as other CPUs). To maintain coherency between cache memory and main memory, the CPU typically will implement one of two cache coherency techniques: (a) bus snooping -- monitoring all addressing operations to detect when another bus master has accessed cached memory locations, or (b) bus arbitration -- detecting when another bus master has taken control of the system bus such that it may have accessed cacheable regions in main memory. In the case of bus arbitration, the CPU and the other bus masters use bus arbitration signals to signal which master has control of the memory bus (any bus that can access memory) and is thereby permitted to access main memory -- to ensure cache coherency, the CPU invalidates (or flushes) all or part of the cache when another bus master takes control of the bus.

Without limiting the scope of the invention, this background information is provided in the context of a specific problem to which the invention has application: ensuring cache coherency for a 386-bus compatible microprocessor design that incorporates an internal write-through cache, but which is used in a multi-master computer system with external cache where bus master arbitration signals HOLD and HLDA are used by the external cache controller to maintain cache coherency, but are not available for use by the microprocessor. The 386-bus and 486-bus microprocessor architectures and signal descriptions are described in greater detail in Agarwal, Rakesh K., 80x86 Architecture and Programming, Prentice-Hall, 1991.

Briefly, the 386 bus architecture supports pipelined and nonpipelined bus cycles. The bus architecture for the later-generation 486 microprocessor supports burst mode addressing, but does not support pipelining. In addition, the 486 bus architecture supports the internal cache of the 486 microprocessor, while the 386 bus architecture supports external cache implementations, but does not include support for an internal cache. As a result, the higher-performance 486 microprocessor is not compatible with conventional 386-based computer systems.

Thus, for existing 386-based computer systems, one approach to obtain the performance benefits of cache memory is by implementing external cache. An alternative approach would be to design a microprocessor architecture that included internal cache but was still compatible with the 386 bus architecture.

Designing a 386-class microprocessor with an internal cache needs to take into consideration maintaining cache coherency when the microprocessor is used in multi-master computer systems. Multiple master computer systems are comprised of multiple asynchronous processes running simultaneously. At a microscopic level, cache management policy typically is to use bus snooping to monitor each bus cycle, and (a) invalidate cache entries that correspond to writes to the primary cache originated by any master other than the microprocessor, and (b) supply data to all read hits (although supplying data is not required if the cache is write-through because main memory is current on writes).

If bus snooping is not used, the microprocessor would normally use bus arbitration signals to implement cache coherency by invalidating the cache when another bus master has taken control of the memory bus. However, because the 386-bus architecture supports cache implemented between the 386 microprocessor terminal pins and main memory external to the microprocessor, but not internally of the microprocessor chip between the CPU core and the microprocessor terminal pins, implementing on-chip cache in a 386-bus and pin compatible microprocessor requires an innovative cache coherency policy.

That is, some 386-based multi-master computer systems do not make available to the microprocessor connector socket all the bus arbitration signals, at least to the extent that bus mastership, address-type, data-type, and cycle-type cannot be completely determined for every bus cycle by examining those signals that are available. For example, some or all bus arbitration signals may only be available to circuits in the computer chipset other than the microprocessor, or an external cache controller. Thus, for a microprocessor designed to be compatible with these computer systems, bus arbitration signals could not be used to reliably maintain coherency of an internal cache.

Moreover, while some 386-based computer systems do provide bus arbitration signals to the CPU connector socket, they do not support hidden memory refresh, but rather use certain ones of those arbitration signals to coordinate memory refresh operations. Installing a microprocessor with internal cache in such a computer system, and using the bus arbitration signals for cache invalidation, would cause a significant degradation in performance.

Various aspects of the invention are set out in claims 1, 3, 9 and 10. Further, preferred features are set out in the dependent claims.

An embodiment of the invention provides a method of data communication between asynchronous processes of a computer system so as to assure the validity of data in process-local buffers without reliance on cycle-by-cycle monitoring of communications between such asynchronous processes.

More specifically, an embodiment of the invention enables the provision of a system having capability to maintain cache coherency for the internal cache of a microprocessor designed for use in a multi-master computer system where bus arbitration signals either are not available to the processor-cache, or cannot be reliably used (or otherwise are not used) by the processor-cache to assure validity of the data in the cache.

In one aspect of the invention, a data communication method involves: (a) for at least one selected process with a process-local buffer, detecting selected synchronization events originating from an external process to communicate to the selected process that valid data is available; and (b) in response to detection of the origination of each such synchronization event, invalidating at least a portion of the data entries in such process-local buffer. As a result, data entries in such process-local buffer are designated valid or invalid for subsequent accesses.

In another aspect of the invention, a cache coherency system comprises synchronization detection and cache invalidation logic. The logic detects outputs from or inputs to the processor associated with bus master synchronization events indicating that bus masters other than the processor may have accessed main memory. The logic is responsive to detection of such outputs or inputs associated with selected synchronization events to invalidate at least part of the data entries in the cache. As a result, a cache miss will occur in response to subsequent accesses to such invalidated cache data entries.

In still another aspect of the invention, a method of implementing a cache coherency system involves: (a) detecting inputs to or outputs from the processor indicative of selected synchronization events which are associated with accesses (reads or writes) by the processor or bus masters to shared memory, and which detections indicate when valid data is available, and (b) in response to each such detected synchronization event, invalidating at least part of the data entries in the cache. As a result, a cache miss will occur in response to subsequent accesses to such invalidated cache data entries.

Thus, an embodiment of the invention can provide a cache coherency technique using a macroscopic policy based on detecting synchronization events at inputs to and/or outputs from a device having a local buffer, e.g. a microprocessor having a local cache indicating that coherency invalidating events may have occurred. Coherency may then be achieved in conventional manner by ensuring that the processor's primary cache either has the most current copy of the contents of main memory, or is marked invalid when the asynchronous process that is changing memory sends a message (i.e. a synchronization event) that valid data is available, thereby signaling completion of requested transfers.

In an exemplary embodiment of the invention, the cache coherency system is used to provide cache coherency for a 386-bus compatible microprocessor with an internal write-through cache. The microprocessor/cache coherency system can be installed in a multi-master computer system that implements an external (secondary) cache where bus arbitration signals are only used by the external cache controller. The computer system uses the PC bus architecture.

In this exemplary embodiment, a cache coherency system comprises two PLAs (programmed logic arrays) -- a "FLUSH" module and optionally a "WAVESHAPING" module. The FLUSH module (a) receives selected bus cycle definition and control signals output from the microprocessor, (b) detects FLUSH (cache invalidation) conditions, i.e., bus master synchronization events, input to or output from the microprocessor and for each such FLUSH condition, (c) provides a FLUSH output signal. The WAVESHAPING module receives the FLUSH signals and provides a corresponding "CPU/FLUSH" signal to the microprocessor with the appropriate set up and hold time.

The CPU/FLUSH output of the WAVESHAPING module is coupled to a "FLUSH" pin on the microprocessor (one of the no-connect pins on the standard 386 pinout) — designated the "FLUSH#" pin. In response to a CPU/FLUSH signal, the microprocessor executes a cache flush operation by invalidating at least some of the data contents of the internal cache.

For the exemplary cache coherency system (using the PC bus architecture), the bus master synchroni-

3

zation events, or FLUSH conditions, that cause cache invalidation are: (a) hardware generated interrupt signals input to the microprocessor, and (b) read or read/write access signals output from the microprocessor to isolated I/O address space, except for those access signals directed to a hard disk or an external coprocessor. The specific bus master synchronization events to be detected as FLUSH conditions may be made programmable to optimize the cache coherency function. In addition, if the computer system uses the (IBM) Micro Channel bus architecture such that memory-mapped I/O rather than I/O space is used for polled I/O synchronization of events between bus masters, the bus master synchronization events can include accesses to selected regions of memory-mapped I/O space.

The technical advantages of the invention include the following. The general data communication method relies on detecting synchronization events between asynchronous processes of a computer system to assure the validity of data in process-local buffers (such as caches) without reliance on cycle-by-cycle monitoring of communications between such asynchronous processes. When used to implement a cache coherency system, this technique enables a 386-bus compatible microprocessor with internal cache (write-through or write-back) to be designed for general use in 386-based computer systems, including those multi-master systems where bus master arbitration signals are not available to the microprocessor, or if available, cannot be reliably used (or otherwise are not used) for cache coherency purposes. The system detects bus master synchronization events at inputs to or outputs from a processor having a local buffer or cache, in which bus master communications could result in cache incoherency -- that is, the system uses a macroscopic policy based on detecting the messages at the processor which indicate coherency invalidating events may have occurred. The system can be implemented using external cache coherency control circuits, or the cache coherency control functionality can be integrated into the microprocessor chip. For the external circuit implementation, the microprocessor and cache coherency control chips can be mounted on a printed circuit board that in turn can be installed into the existing microprocessor socket of the computer system without requiring any motherboard redesign to provide either bus arbitration signals, or cache invalidation signals. The system can be used with computer systems based either on the PC (ISA or EISA) or microchannel bus architecture.

The invention will be described hereinafter, by way of example with reference to an exemplary embodiment, with reference to the accompanying drawings, in which:

Figure 1 is a general block diagram of a microprocessor including a cache control system and to which a cache coherency control system embodying the invention may be applied;

Figure 2 is a more detailed block diagram of the Cache Control System, illustrating the cache control registers, and the supporting logic for loading the cache control registers, and for controlling cache operations.

Figure 3 is a block diagram illustrating a cache coherency control system, including a "FLUSH" module and a "WAVESHAPING" module, used in connection with a microprocessor with internal primary cache; and

Figures 4a and 4b illustrate the pin-outs respectively for the FLUSH module and the WAVESHAPING module shown in Figure 3.

The exemplary cache control system is used to control the internal cache of a microprocessor compatible with conventional 386-based computer systems. The microprocessor uses 32-bit internal and 16-bit external data paths, with a 24-bit external address, which for 386-based computer systems is commonly designated as the SX bus. Alternatively, the exemplary embodiment could have been described in connection with a computer system using the DX bus which has 32-bit external data and address buses.

The exemplary cache coherency system is combined with an exemplary microprocessor with internal write-through 1K cache. The cache coherency system supports installation of the combined microprocessor/cache coherency system into the microprocessor socket of multi-master computer systems in general, and in particular, those systems in which bus arbitration signals are not available for use by that socket, or if available, do not reliably indicate in conjunction with the microprocessor's bus control signals the precise nature of every bus cycle that occurs in the computer system. The exemplary computer system (a) includes an external cache implementation in which only the external cache controller is able to use bus arbitration signals to maintain cache coherency, and (b) uses the DX 32-bit PC (ISA or EISA) bus architecture. The exemplary microprocessor includes a FLUSH# pin that is one of the no-connect pins of the standard 386 pinout.

The exemplary cache coherency system is also applicable to any cache design, and to any cache size or organization, although different implementation and performance issues are involved depending on whether the cache design is write-through or write-back. While cache invalidation for write-through caches merely involves marking the contents of the cache invalid, cache invalidation for write-back caches requires a cache-flush operation in which the cache contents are first written back to main memory, and then marked invalid. Thus, using the cache coherency system with a write-back cache might result in performance degradation due to excessive flush activity in systems that produce an abundance of synchronization events. Another application where use of the cache coherency system with a write-through cache is probably preferred is in symmetrical multi-processing (SMP) environments, where the processors rely on the assumption that main memory always holds valid data -- a write through policy would probably yield better performance, as well as conformance with the system assumption of memory validity. At present, the SMP environment is not supported by most conventional operating systems (MS-DOS, UNIX, OS2, WINDOWS).

Notwithstanding the technical distinction between cache invalidation and cache flush, the term "flush" is often used by those skilled in the art to describe both operations -- invalidation of write-through caches and write-back-then-invalidate for write-back caches. This detailed description uses the terms flush and invalidate interchangeably.

**Cache Control System.**

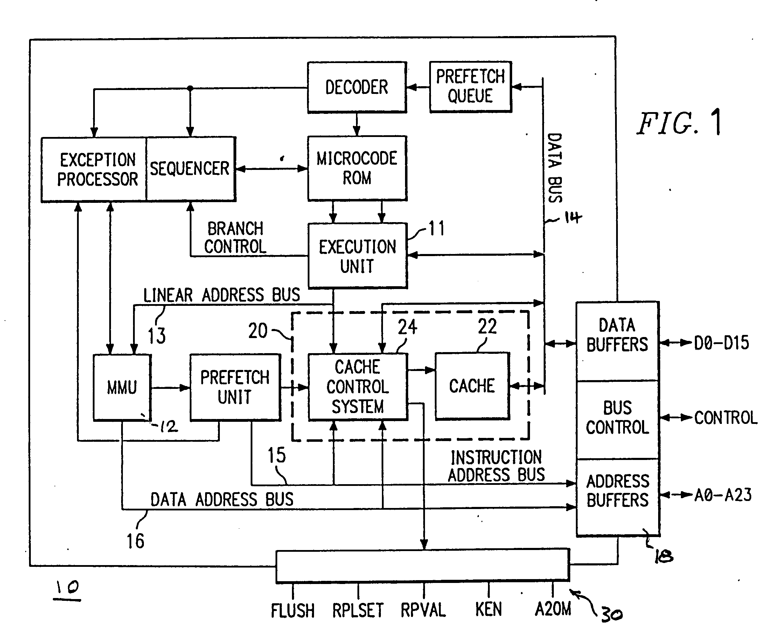

Figure 1 illustrates the exemplary implementation of a cache control system in a microprocessor with internal cache. The microprocessor chip is designated generally as 10, and includes an internal cache memory system 20.

The microprocessor 10 includes an execution or processor unit 11 and a memory management unit (MMU) 12. The execution unit outputs linear (virtual) addresses over an internal linear address bus 13, while data transfers occur over an internal data bus 14.

The MMU converts linear addresses to physical addresses, which output over separate internal instruction and data address buses 15 and 16. The physical addresses are provided both (a) to the cache memory system 20, and (b) to address buffers 18 which interface to the external address bus A0-23.

The internal cache memory system includes a cache 22 and a cache control system 24. The cache control system receives physical addresses off the internal instruction and data address buses 15 and 16 (together with the lower order bits of the linear address, which are not translated in the MMU). In addition, the cache control system is able to receive data from the internal data bus 14.

The exemplary cache 22 is a 1 Kbyte unified (instruction and data) write-through cache with 256 cache lines of 4 bytes each, corresponding to a 32-bit internal data path. The cache can be organized as either direct mapped or two-way set associative. When organized as two-way set associative, the cache is separated into two banks of 128 cache lines. The organization and operation of the cache is conventional.

The cache control system 24 provides cache addresses to the cache 22, and cache configuration signals that enable/disable control and status pins 30 associated with cache operations. Both cache addresses and the cache configuration signals are generated based on cache control information loaded under software control into the cache control system (specifically into cache control registers).

In particular, the cache control system 24 stores cache control information used to define non-cacheable regions of the address space. For example, the cache control information may define as non-cacheable the first 64 Kbytes above each 1 Mbyte boundary, thereby enabling the microprocessor 10 to support 8086 real mode addressing.

For each physical address from the MMU, the cache control system determines whether the address is directed to a non-cacheable region of the address space based on the cache control information currently stored in the cache control system. Accesses to non-cacheable regions will be treated as cache misses, requiring external bus cycles, but will not result in cache fills.

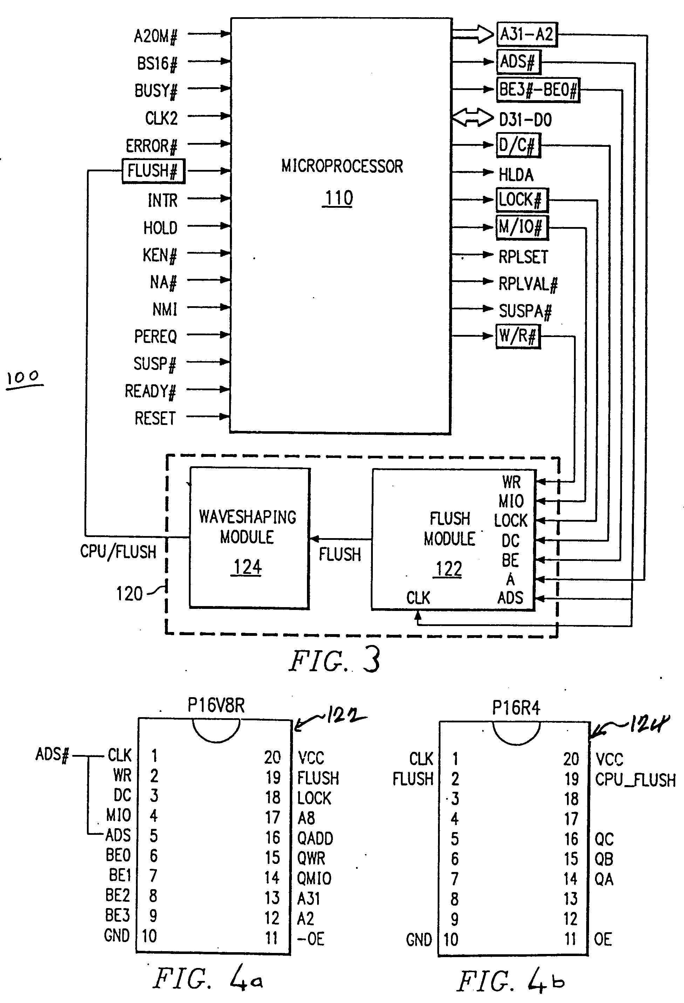

Figure 3 illustrates the cache control system in greater detail. The cache control system 50 includes six on-chip cache control registers 52: two 8-bit cache configuration registers CCR0 and CCR1, and four 16-bit non-cacheable region registers NCR1-NCR4.

Cache control information is written into the cache control registers using I/O ports 22h and 23h. Access to the cache control registers 52 is achieved by writing the address (referred to as the index) of the cache control register to I/O port 22h, with interface to the internal data bus being provided by an index register 54. Data is then written or read from the specified cache control register through I/O port 23h, with interface to the internal data bus being provided by a data register 53.

Each I/O port 23h operation must be preceded by an I/O port 22h operation, otherwise the second and later I/O port 23h operation will be directed off-chip and not affect stored control information. Access to I/O port 22h with an index outside of the address range assigned to the cache control registers (C0-CFh) will result in external bus cycles and will not affect any control information stored in the on-chip cache control registers.

Based on the stored cache control information, the cache control system generates cache address control signals using cache address control logic 60. In addition, cache configuration signals enable/disable the control and status pins 30: A20M#, KEN#, RPLSET#, RPLVAL#, and FLUSH#.

The cache address control logic 60 includes six non-cacheable region comparators 61-66, the first two of which are associated with the NC0 and NC1 bits of CCR0, and the last four of which are associated respectively with NCR1-NCR4. The output of each comparator is gated by a respective AND gate 61A-66A, with the gated outputs being applied to a NOR gate 68 (in the case of comparators 63-65, through the write protect logic 70).

The gated outputs of three of the non-cacheable region comparators 63-65, which are associated with non-cacheable region registers NCR1-NCR3, are also applied to write protect logic 70. Specifically the three comparator outputs are applied to two sets of AND gates 73A-75A and 73B-75B. associated with respective non-cacheable region registers NCR1-NCR3. The gated outputs are applied respectively to the NOR gate 68 and to a NOR gate 78.

**Cache Control Registers.**

The cache control registers -- cache configuration registers CCR0-1 and non-cacheable region registers NCR1-4 -- are loadable under software control with cache control information.

The register index assignments for the cache control registers are indicated in Table 1.

**TABLE 1**

| Cache Control Register Index Assignments | | |
|---|---|---|
| **Register Name** | **Register Index** | **Number of Bits in Register** |
| CCR0 | C0h | 8 |
| CCR1 | C1h | 8 |
| NCR1 | C5h - C6h | 16 |
| NCR2 | C8h - C9h | 16 |
| NCR3 | CBh - CCh | 16 |
| NCR4 | CEh - CFh | 16 |

**Cache Configuration Registers.**

Bit assignments for the Cache Configuration Registers CCR0 and CCR1 are listed in Tables 2A and 2B.

### TABLE 2A

| Cache Configuration Register CCR0 Bit Assignments | | | |
|---|---|---|---|
| **Register Name** | **Register Index** | **Bits** | **Description** |
| CCR0 | C0h | 0 | NC0: If = 1, sets the first 64 Kbytes at each 1 Mbyte boundary as non-cacheable. |
| | | 1 | NC1: If = 1, sets 640 Kbytes to 1 Mbyte region as non-cacheable. |
| | | 2 | A20M: If = 1, enables A20M# input pin. |
| | | 3 | KEN: If = 1, enables KEN# input pin. |
| | | 4 | FLUSH: If = 1, enables FLUSH# input pin. |
| | | 5 | BARB: If = 1, enables flushing of internal cache when hold state is entered. |
| | | 6 | CO: Selects organization: |
| | | | 0 = 2-way set associative |
| | | | 1 = direct-mapped |
| | | 7 | SUSPEND: If = 1, enables SUSP# input and SUSPA# output pins. |

### TABLE 2B

| Cache Configuration Register CCR1 Bit Assignments | | | |
|---|---|---|---|
| **Register Name** | **Register Index** | **Bits** | **Description** |
| CCR1 | C1h | 0 | RPL: If = 1, enables output pins RPLSET and RPLVAL#. If not enabled, outputs RPLSET and RPLVAL# will float. |
| | | 1-3 | Reserved |
| | | 4 | WP1: If = 0, NCR1 defines a non-cacheable region. If = 1, NCR1 defines a cacheable but write protected address region. Reset state = 0. |
| | | 5 | WP2: If = 0, NCR2 defines a non-cacheable region. If = 1, NCR2 defines a cacheable but write protected address region. Reset state = 0. |
| | | 6 | WP3: If = 0, NCR3 defines a non-cacheable region. If = 1, NCR3 defines a cacheable but write protected address region. Rest state = 0. |
| | | 7 | Reserved |

All bits are cleared to 0 at reset, except C6h which defaults to OFh to set the first non-cacheable region size to be 4 Gbytes.

**Non-Cacheable Region Registers.**

Bit assignments for the non-cacheable region registers NCR1-4 are listed in Table 3A. The non-cacheable regions NCR1-4 are defined by a base (or starting) address field and a 4-bit block size field. The size of the non-cacheable regions range from 4 Kbyte to 4 Gbyte as shown in Table 3B.

## TABLE 3A
### Non-Cacheable Region Register Bit Assignments

| Register Name | Register Index | Bits | Description |
|---|---|---|---|
| NCR1 | C5h | 7 - 0 | Address bits A23 - A16 of Region 1 starting address |
| | C6h | 7 - 4 | Address bits A15 - A12 of Region 1 starting address |
| | | 3 - 0 | Size of non-cacheable Region 1 (Table 3B) |
| NCR2 | C8h | 7 - 0 | Address bits A23 - A16 of Region 2 starting address |
| | C9h | 7 - 4 | Address bits A15 - A12 of Region 2 starting address |
| | | 3-0 | Size of non-cacheable Region 2 (Table 3B) |
| NCR3 | CBh | 7 - 0 | Address bits A23 - A16 of Region 3 starting address |
| | CCh | 7 - 4 | Address bits A15 - A12 of Region 3 starting address |
| | | 3-0 | Size of non-cacheable Region 3 (Table 3B) |
| NCR4 | CEh | 7 - 0 | Address bits A23 - A16 of Region 4 starting address |
| | CFh | 7 - 4 | Address bits A15 - A12 of Region 4 starting address |
| | | 3-0 | Size of non-cacheable Region 4 (Table 3B) |

Note that the non-cacheable region registers are allocated for a 24-bit physical address -- if a 32-bit physical address is used, the register allocation would be expanded to accommodate address bits 31-24 (with a corresponding register index).

## TABLE 3B

| Size of Non-Cheable Regions | | | |
|---|---|---|---|
| **Bits 3 - 0** | **Non-Cacheable Region Size** | **Bits 3 - 0** | **Non-Cacheable Region Size** |
| 0000 | Disabled | 1000 | 512 Kbytes |
| 0001 | 4 Kbytes | 1001 | 1 Mbytes |
| 0010 | 8 Kbytes | 1010 | 2 Mbytes |
| 0011 | 16 Kbytes | 1011 | 4 Mbytes |
| 0100 | 32 Kbytes | 1100 | 8 Mbytes |
| 0101 | 64 Kbytes | 1101 | 16 Mbytes |
| 0110 | 128 Kbytes | 1110 | 32 Mbytes |
| 0111 | 256 Kbytes | 1111 | 4 Gbytes |

The block size of 4 Gbytes represents the entire address space of 386/486 microprocessors. Thus, specifying a block size of 4 Gbytes in effect disables caching for all microprocessor addressing operations. This technique for disabling caching is useful for computer systems in which the microprocessor is powered up in the cache-on mode, but for various reasons caching needs to be disabled.

Also, note that, for a given region of address space, specifying a block size field of 0 effectively prevents addresses in that region register from being designated as non-cacheable.

**Cache Control and Status Pins.**

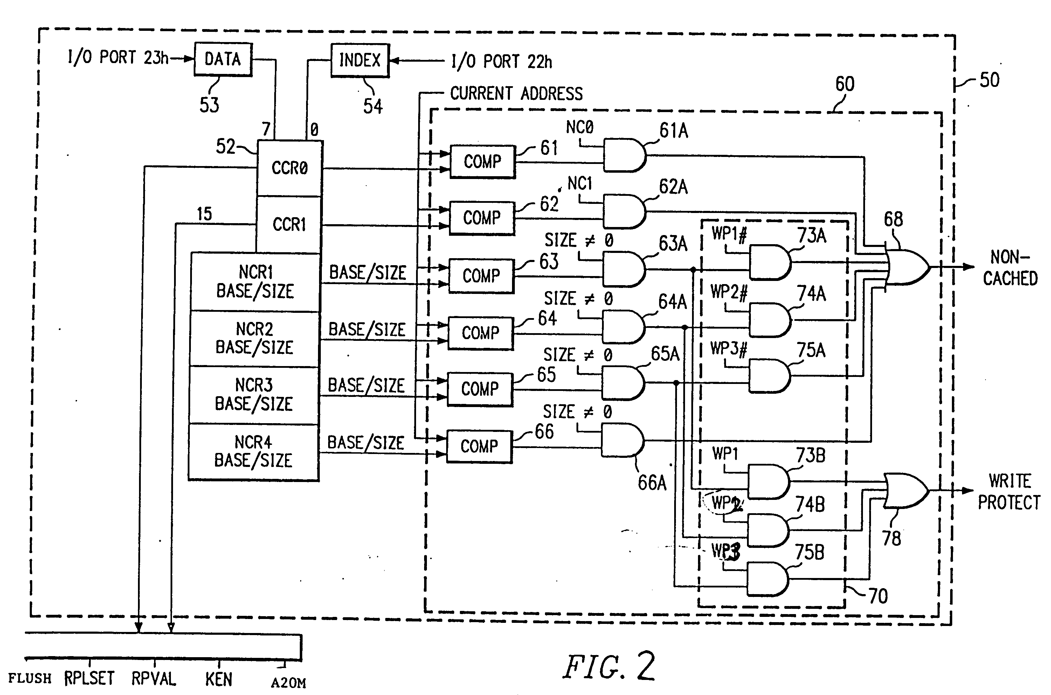

Referring to Figure 2, the exemplary embodiment of the microprocessor provides cache control and status pins that, if supported by the computer system, can be used by the cache control system to provide additional modes of controlling and interfacing to the cache. These pins are: A20M#, KEN#, RPLSET, RPLVAL#, and FLUSH#.

Cache Flush (FLUSH#) is an active low input which invalidates (flushes) the entire cache. FLUSH# can be enabled using the FLUSH bit in the CCR0 configuration register. FLUSH# is disabled as a result of RESET and is enabled by setting bit 4 of CCR0.

Thus, for computer systems that permit DMA (direct memory access), the exemplary microprocessor can operate in the cache enabled mode if the computer system provides FLUSH signaling to the microprocessor, thereby enabling the cache control system to invalidate the cache following DMA accesses to memory.

**Cache Control Operation.**

When caching is enabled, the microprocessor will cache any unlocked memory data read cycle. The cache control system ensures that the microprocessor automatically does not cache accesses to regions of the memory address space defined as non-cacheable by the cache control information stored in the cache control registers -- cache configuration registers CCR0-1 and non-cacheable region registers NCR1-4.

**Cache Addressing.**

Referring to FIGURE 2, the cache address control logic 60 includes non-cacheable region comparators 61-66. Each comparator receives (a) the current physical address input to the cache, and (b) a non-cacheable region output from a respective cache configuration register CCR0-1 or non-cacheable region register NCR1-4.

Comparator 61 receives the NC0 bit from cache configuration register CCR0, while comparator 62 receives the NC1 bit from the same register. (See, Table 3A.) If either, or both, of these bits is set, thereby defining the corresponding region of address space as non-cacheable, then the associated comparator output will indicate that the current address is non-cacheable if it is within such non-cacheable region. The outputs of these comparators are gated by the respective AND gates 61A-62A, with the NC0 and NC1 register bits providing the gating signal.

Comparator 63 receives from non-cacheable region register the base/size data that defines a corresponding non-cacheable region of address space. (See, Tables 3A and 3B) The comparator output will indicate that the current address is non-cacheable if it is within such non-cacheable region. The output of the comparator is gated by AND gate 63A, with the size field providing the gating signal.

The operation of comparators 64-66 is analogous to that of comparator 63.

The gated outputs of comparators 61-62 and 66 are input directly to the NOR gate 68. The gated outputs of comparators 63-65 input to the write-protect logic 70.

For the exemplary embodiment, a non-cacheable address control signal from the cache control system is interpreted by the cache as disabling cache fills for that non-cacheable address. That is, a read operation will not be affected if it results in a cache hit (for example, if the corresponding cache line was filled and then the cache control information in the cache control registers changed). Alternatively, a non-cacheable address control signal from the cache control system could be interpreted as a miss in the case of a read operation, regardless of whether the non-cacheable address is actually in the cache.

In response to write-protect address control signals, the cache will disable writes to any cache line that has been defined as within a write-protect region. Of course, read operations for such cache lines will be processed normally.

## Cache Invalidation.

If the microprocessor is to be used in a computer system that supports Direct Memory Access (DMA), cache coherency between the internal cache of the microprocessor and external memory should be taken into account. The microprocessor 10 does not support "bus snooping" (i.e., monitoring bus activity during DMA operations); consequently, cache coherency considerations dictate that the contents of the internal cache should be invalidated when previously cached data is modified in external memory by another bus master.

The microprocessor 10 supports cache invalidation in response to the assertion of a FLUSH# signal if the FLUSH bit is set in the appropriate cache configuration register CCR0 in the cache control system 24.

With respect to FLUSH signaling, the microprocessor 10 samples the FLUSH# input each clock cycle, and if asserted, invalidates the entire contents of the internal cache. The actual point in time where the cache is invalidated depends upon the internal state of the execution pipeline.

## Cache Coherency System.

Figure 3 illustrates an exemplary implementation of a cache coherency system embodying the invention combined with a microprocessor with internal write-through cache, forming an integrated microprocessor/cache coherency system. The microprocessor/cache coherency system is designated generally as 100, and includes a microprocessor 110 generally corresponding to the microprocessor 10 in Figure 1 together with cache coherency control logic 120 comprised of a FLUSH module 122 and a WAVESHAPING module 124.

However, whereas the microprocessor 10 in Figure 1 is shown as an SX 16-bit pinout version, the microprocessor illustrated in Figure 3 is shown as a DX 32-bit pinout version that supports the 32-bit DX Address Bus A31-A2 plus byte enable bits BE3#-BE0# and Data Bus D31-D0. Implementation of the cache coherency system for an SX 16-bit pinout version would be a routine design modification.

In the illustrated embodiment, both the FLUSH module and the WAVESHAPING module are implemented in reprogrammable PALs (programmed array logic). These PALs are commercially available from a number of vendors -- the specific parts used for the exemplary implementation are P16V8R and P16R4, respectively. In addition, a conventional clock PAL (not shown) can be used to provide clocking signals.

The cache coherency system is shown implemented off-chip as an upgrade to an existing microprocessor chip design -- the microprocessor/cache coherency system being incorporated onto a small printed circuit board with PGA (pin grid array) connecting pins for installation into a standard 386-class microprocessor socket. Alternatively, the cache coherency functions performed by the cache coherency control logic system could be integrated on-chip as part of the microprocessor 110.

The cache coherency control logic 120 performs a synchronization detection function to detect bus master synchronization events in which bus masters other than the microprocessor 110 have access to main memory (bus master communication events). When a bus master synchronization event is detected, the cache coherency logic outputs a CPU/FLUSH signal to the microprocessor 110 -- the microprocessor continuously samples its FLUSH input pin, and in response to FLUSH# being asserted, executes a cache invalidation routine to FLUSH (invalidate) the cache in known manner, ensuring cache coherency.

Figure 4a illustrates the pinout for FLUSH module 122. The FLUSH module receives from the microprocessor 110 selected bus cycle definition and control signals and selected address lines.

The bus cycle definition signals used by the FLUSH module 122 are Memory/IO (M/IO#), Data/Control (D/C#), Write/Read (W/R#), and LOCK#. The primary bus definition signals -- M/IO#, D/C#, and W/R# -- are driven valid when ADS# (Address Strobe) becomes active. LOCK# is asserted by the microprocessor 110 to deny control of the system bus to other bus masters during certain operations including interrupts to the microprocessor 110.

The bus control signal used by the FLUSH module is Address Strobe (ADS#) -- the other standard bus control signals, Ready (READY#) and Next Address Request (NA#), are not used. ADS# is a three-state output indicating that the microprocessor has driven a valid address (A31-A2, BH3#-BE0#) and bus cycle definition (M/I0#, D/C#, W/R#) on the appropriate output terminal pins.

Using these signals to define each bus cycle type, the FLUSH module 122 detects bus master synchronization events, i.e., FLUSH (cache invalidation) conditions. For each such FLUSH condition, the FLUSH module provides a FLUSH output. M/I0#, W/R#, and the Address Bits A2/A8 are latched and used as QMIO/QWR/QADD inputs for the combinatorial logic in the PAL 122 (Figure 3a). Latching in the PAL 122 is not required for the other inputs -- DC#, ADS#, LOCK#, the other Address Bits and the Byte Enable signals (BE3# - BE0#).

Figure 4b illustrates the pinout for the WAVESHAPING PAL module 124. The WAVESHAPING module receives the FLUSH output signal from the FLUSH module 122 and generates a corresponding CPU/FLUSH output with the appropriate set up and hold time for the microprocessor 110.

Alternatively the FLUSH module may be designed to output a FLUSH signal with the required set up and hold time, in which case the WAVESHAPING module would be eliminated.

The FLUSH output (CPU/FLUSH) of the WAVESHAPING module is coupled to the FLUSH# pin of the microprocessor 110. In response to an active CPU/FLUSH signal, the microprocessor 110 invalidates the contents of the internal cache in conventional manner, such that a subsequent access to invalidated data entries will result in a cache miss.

**Synchronization events.**

In general, the CPU (i.e. multiprocessor 110) and other bus masters in a multi-master computer system use one or more of the following bus master synchronization events to synchronize bus master access to the system (local) bus: (a) hardware generated interrupts, (b) accesses to isolated I/O space, and/or (c) accesses to memory-mapped I/O space. In particular, in the PC bus architecture, bus master events are synchronized by interrupts and polled isolated I/O, while in the microchannel bus architecture, bus master events can be synchronized by polled memory-mapped I/O, as well as by interrupts and polled I/O.

For the exemplary computer system using the PC bus architecture, the bus master synchronization events used for cache coherency are: (a) hardware generated interrupts to the CPU, and (b) read or read/write accesses from the CPI to I/O address space, except for accesses directed to selected peripherals -- a hard disk or an external coprocessor. These flush mechanisms are readily implemented either on or off chip.

**Hardware Generated Interrupts.**

In the exemplary embodiment, the FLUSH module 122 generates an active FLUSH signal every INTERRUPT ACKNOWLEDGE CYCLE. This FLUSH-on-interrupt (FLINT) mechanism is used to maintain cache coherency when the exemplary microprocessor/cache coherency system is installed in a multi-master system where interrupts are used to synchronize events between bus masters.

With a 1K internal cache, a FLINT on all interrupts does not cause a significant degradation in performance -- however, significantly increasing cache size (and correspondingly increasing cache-fill time) may require FLINT programmability so that only selected interrupts result in FLUSH conditions. FLINT programmability would have to take into account the fact that interrupt vectors can be dynamically changed by the programmer.

**I/O Reads.**

Also, in the exemplary embodiment, the FLUSH module 122 generates an active FLUSH signal for each read access or read/write access to I/O space, except those directed to an external coprocessor or hard disk. This FLUSH-on-I/O (FLIO) flush mechanism is used to maintain cache coherency when the exemplary microprocessor/cache coherency system is installed in a multi-master system where polled I/O is used to synchronize events between bus masters.

Making FLIO programmable enables the cache coherency system to avoid asserting FLUSH for accesses to selected regions of I/O space that do not involve cache coherency considerations. Thus, for the exemplary embodiment, since industry standard IDE drives, ST506 disk drives, and math coprocessors all rely on program controlled data transfers, FLUSH need not be asserted in response to access to these devices.

As an alternative to implementing FLIO only for read and read/write accesses, the FLUSH module could be configured to implement this flush mechanism in response to write accesses from the microprocessor 110 to I/O address space as well. For example, some specialized DMA boards communicate with the operating system through I/O space (such as for the purpose of communicating status information), so that write accesses to I/O space would be a cache/memory synchronization point for a computer system incorporating such a specialized board.

### Memory-Mapped I/O Reads.

To provide support for the microchannel bus architecture, the above described embodiment of the cache coherency control system could be modified to include as bus master synchronization events used for cache coherency: read accesses to memory-mapped I/O address space. This FLUSH-on-memory-mapped I/O (FLMIO) flush mechanism would be used to maintain cache coherency for installations of the microprocessor/cache coherency system in a multi-master system where polled memory-mapped I/O is used to synchronize events between bus masters.

As with FLIO, making FLMIO programmable would enable the cache coherency system to avoid asserting FLUSH for accesses to selected regions of memory-mapped I/O space that would not involve cache coherency considerations. Thus, it would probably be advisable from a performance standpoint to exclude read accesses directed to a hard disk or an external coprocessor.

Unlike FLIO, implementing the FLMIO flush mechanism off chip in a companion FLMIO chip is probably not practical in terms of size and cost because such an implementation would require all of the Address and Data lines, and a number of the bus definition/control lines. For the exemplary microprocessor, including the cache control system, one approach would be to implement the FLMIO flush mechanism on-chip using registers similar to the non-cacheable region registers NCR1-NCR4 (Figure 2).

For example, FLMIO could be implemented by designating the non-cacheable region register NCR4 to be programmable to define a region of memory-mapped I/O space as either (a) non-cacheable, or (b) non-cacheable with FLUSH. That is, a read or read/write access directed to a FLMIO location within the region specified by NCR4 would not be cached by the microprocessor, and would also cause the microprocessor to invalidate the contents of the cache.

As with FLIO, implementing FLMIO for write accesses may be advantageous for certain specialized hardware or software application. For example, specialized DMA boards .

### FLUSH Module.

Referring to Figure 4a, the FLUSH module 122 may be implemented as a reprogrammable PAL, programmed to assert the FLUSH output on all bus master synchronization events -- hardware generated interrupts input to the microprocessor 110 and I/O reads by the microprocessor 110 except those to the coprocessor or disk, as previously described. The FLUSH PAL is comprised of combinatorial logic -- the FLUSH output signal from the PAL 122 is a pulse output that has not been shaped to provide the required set up and hold times for the FLUSH input to the microprocessor (that waveshaping function is performed by the WAVESHAPING module).

The FLUSH module identifies the bus cycle type from (a) the bus cycle definition signals M/IO#, D/C#, W/R#, and LOCK#, (b) the bus control signal ADS#, and (c) the address signals A31/A8/A2 and byte enable signals BE3#-BE0# all appearing at corresponding terminal pins of the microprocessor 110. In particular, A31 is associated with the math coprocessor and A8 is associated with the hard disk, while A2 and the byte enable signals can be used to further define bus cycles associated with interrupts.

The signals M/IO#, W/R#, and the Address Bits A2/A8 input to the PAL 122 must be latched as QMIO/QWR/QADD and fed back as inputs for the combinatorial logic in the PAL. The signals LOCK#, ADS#, Address Bit A31, and the byte enable signals BE3#-BE0# input to the PAL 122 do not have to be latched.

The FLUSH module is clocked by the ADS# strobe that initiates each bus cycle of the microprocessor 110-- the ADS line is tied to both the CLK and ADS input pins of the module. For each ADS# strobe, the FLUSH module decodes the input signals and generates an active low FLUSH output signal if either a FLINT or FLIO condition is detected.

The input pin definitions for the FLUSH module 122 are:

| CLK,!OE | pin 1,11; |
| WR,DC,MIO,ADS,LOCK | pin 2,3,4,5,18; |
| BE0,BE1,BE2,BE3 | pin 6,7,8,9; |
| A2,A31,A8 | pin 12,13,17; |

and the output pin definitions are:

| FLUSH | pin 19 |
| QA,QB,QC | pin 14,15,16 |

where, ! designates NOT, and the following equates apply: H,L,X,Z,C = 1,0,.X.,.Z.,.C..

The PAL equations for the FLUSH module can be written:

```
QA        :=    MIO
QB        :=    WR
QC        :=    A31#A8
!FLUSH   =    ((!QA & !DC & !QB & !LOCK & !BE0# & BE1 & BE2 & BE3# & !A2)#(!QA & !QB & !QC))
```

where, := designates a latched operation; = designates a combinatorial operation; & designates AND, and # designates OR. These PAL equations reduce to:

```
QA        :=    MIO
QB        :=    WR
QC        :=    A31#A8
FLUSH    =    !(!QA & !QB & !QC # !A2 & !BE0# & BE1 & BE2 & BE3# & !DC & !LOCK & !QA & !QB)
```

These PAL equations define the configuration of the PAL to implement the FLINT and FLIO flush mechanisms in accordance with the exemplary embodiment. Implementing FLIO for write accesses would involve a straightforward modification of these PAL equations (the PAL could be configured to make FLIO for write accesses jumperable).

**WAVESHAPING Module.**

Referring to Figure 4b, the WAVESHAPING module 124 may be implemented as a PAL, programmed to control the duty cycle of the CPU/FLUSH output signal provided to the FLUSH pin of the microprocessor. The WAVESHAPING PAL is comprised of both combinatorial and state machine logic.

The WAVESHAPING module 124 receives the FLUSH signal from the FLUSH module 122, and generates a CPU/FLUSH output signal with the appropriate setup and hold time in relation to the Phase 2 rising edge of the two-phase CLK (respectively 5ns and 3ns for the exemplary microprocessor). The CLK input for the WAVESHAPING is provided by the external clock PAL circuit. The registered (flip-flop) outputs QA/QB/QC represent states of the state machine (no connects).

The input pin definitions are:

| CLK,OE | pin 1,11 |
| FLUSH | pin 2 |

and the output pin definitions are:

| QA,QB,QC | pins 14, 15, 16 |
| CPU/FLUSH | pin 19 |

where the following equates apply:

```
H,L,X,Z,C = 1,0,.X.,.Z.,.C.
ST = [QC, QB, QA]
S0 = ^b000
S1 = ^b001
S2 = ^b010
```

S3 = ^b011
S4 = ^b100
S5 = ^b101
S6 = ^b110
S7 = ^b111

The state diagrams for the waveshaping state machine are:
State S0:    if FLUSH then S0 else S1
State S1:       goto S2
State S2:       goto S3
State S3:       goto S4
State S4:       goto S5
State S5:       goto S6
State S6:    if FLUSH then S0 else S7
State S7:       goto S6

The PAL equation for the combinatorial logic can be written:

$$!CPU\_FLUSH = (ST > = S1) \& (ST > = S5);$$

This PAL equation reduces to:

QC    := !(!QA & !QC # !QB & !QC # FLUSH & !QA & QB);
QB    := !(QA & QB & !QC # !QA & !QB # FLUSH & !QA & QC)
QA    := !(QA # FLUSH & !QB & !QC # FLUSH & QB & QC);

$$CPU\_FLUSH = !(QA \& !QC \# !QB \& QC \# QB \& !QC);$$

These state diagrams and PAL equations define the configuration of the WAVESHAPING PAL to control the duty cycle of the FLINT and FLIO flush mechanisms in accordance with the exemplary embodiment.

The microprocessor 110 samples its FLUSH# pin every clock cycle (Phase 2). If the WAVESHAPING module has asserted CPU/FLUSH, the microprocessor will invalidate the cache -- the length of time required to complete cache invalidation depends on the internal state of the execution pipeline. Until cache invalidation is complete, the microprocessor will not issue an ADS# strobe to begin a new bus cycle, so that any FLINT or FLIO condition occurring during cache invalidation will not result in CPU/FLUSH being asserted (i.e., the FLUSH module must await the next ADS# strobe).

**Alternative On-Chip Implementation.**

The cache coherency system can be readily implemented on chip. For the exemplary microprocessor 110, an appropriate system configuration to implement the FLINT, FLIO, and FLMIO flush mechanisms would be as follows.

The cache would be enabled at power up or reset, and (referring to Figure 2) configured as follows:
* NC0 Enabled - 1 Mbyte + 64 Kbytes Non-cacheable
* NC1 Enabled - 640 Kbyte - 1 Mbyte Non-cacheable
* Non-cacheable region register configuration
    * Physical address C000 0000h (3 Gbyte) + 64 Kbytes non-cacheable (this is the Weitek coprocessor address space)
    * Physical address FFFF 0000h (4 Gbyte - 64 Kbytes) + 64 Kbytes Non-cacheable (this is the ROM BIOS physical address space).
* FLUSH Enabled - Set to take advantage of FLINT, FLIO, and FLMIO. (when FLUSH is disabled, FLINT, FLIO, and FLMIO are ignored, and a cache flush will not occur).

With this cache configuration, one proposed approach to implementing FLINT and FLIO is given below. A proposed approach to implementing FLMIO is described above under "Memory-Mapped I/O Reads.".

For FLINT, the microprocessor 110 would be configured to execute a cache invalidation every Interrupt Acknowledge Cycle 2 when FLUSH is enabled. In addition, FLINT could be made programmable by including in the microprocessor design special FLINT registers to allow the programmability of the interrupt vectors that would generate FLUSH.

For FLIO, four FLIO address range registers could be included in the microprocessor register set, each programmed in a similar fashion to the non-cacheable region registers. The four I/O regions could be programmed to cause the microprocessor to execute a cache invalidation operation on I/O accesses to such devices as, Floppy Disks, Hard Disks, Network cards, and other bus master cards if required.

For example, four 16-bit FLIO registers could be incorporated into the microprocessor, where bits 15 - 3 represent A15 - A3, bit 2 controls flush on I/O read or I/O read/write, and bits 1 - 0 control I/O address region granularity.

14

| 15 | | 3 | 2 | 1 | 0 |
|---|---|---|---|---|---|
| Address A15 - A3 | | | R/W | Granularity | |

| Bit 2 | I/O Read Write |
|---|---|
| 0h | Flush on I/O Read only |
| 1h | Flush on I/O Read or Write |

| Bit 1 - 0 | Granularity |
|---|---|
| 0h | Disabled (No Flush) |
| 1h | 8 bytes |
| 2h | 16 bytes |
| 3h | Flush on all I/O |

Although the Detailed Description of embodiments of the invention has been directed to certain exemplary embodiments, various modifications of these embodiments, as well as alternative embodiments, will be suggested to those skilled in the art. For example, the invention has general applicability to a method of data communication between asynchronous processes of a computer system so as to assure the validity of data in process-local buffers without reliance on cycle-by-cycle monitoring of communications between such asynchronous processes (where a process-local buffer is memory that is accessed only by a particular process, and is not necessarily a cache). This technique has specific application in implementing a cache coherency system for a processor-cache combination in which the processor-cache is used in a multi-master computer system in which multiple asynchronous processes access shared memory and associate with each such access a synchronization event that indicates when valid data is available (typically, for reads from a process, the synchronization event precedes data transfer, while for writes to a process, the synchronization event follows data transfer). Also, while an exemplary embodiment of a cache coherency system was described in the context of a microprocessor with internal primary cache, the invention is equally applicable to a microprocessor with external primary cache where the microprocessor does not receive bus arbitration signals sufficient to determine the precise nature of every bus cycle in the system. Although the exemplary embodiment was described in connection with a computer system that does not provide bus arbitration signals to the microprocessor socket, the invention has equal applicability to computer systems in which bus arbitration signals are available to the microprocessor, but cannot be used reliably for cache coherency purposes. The term "cache" is meant to be generic for any intermediate level memory between the execution unit and main memory, while the term "bus arbitration signal" is meant to be generic for any signal used to signal bus master communication events.

## Claims

1. A data processor having a central processing unit operatively connected with a buffer including addressable data storage locations accessible by said central processing unit, said processor including signal terminals, and synchronization event detection means connected to selected ones of said signal terminals to detect one or both of (a) address information from said processor destined for accessing selected regions of I/O space, and (b) interrupt inputs to said processor, and responsive to such detection to output a data invalidation signal to at least some of said data storage locations of said buffer.

2. The data processor of Claim 1, wherein said buffer is a processor-local cache.

3. A data processor operatively connected to a local cache in which data entries can be stored for access by said processor, and suitable for operation in a multi-master, shared memory computer system in which bus arbitration signals either are not available to said processor, or are not exclusively relied on by said processor to assure validity of data in the cache, and a cache coherency system comprising:

synchronization event detection means connected to said processor for detecting at said processor, bus master synchronization events indicating possible access to said shared memory by bus masters other than said processor, and

cache invalidation means operable to invalidate at least part of the data entries in said cache in response to detection by said synchronization detection means of selected ones of said synchronization events;

whereby a cache miss will occur in response to subsequent accesses to such invalidated cache data entries.

4. The data processor of Claim 3, wherein the bus master synchronization events include selected hardware generated interrupts.

5. The data processor of Claim 3 or Claim 4, wherein said bus synchronization events include address outputs to access selected regions of I/O space.

6. The data processor of any of Claims 1, 2 and 5, wherein said synchronization event detection means comprises logic circuitry connected to respond to selected bus definition signals, bus control signals, and address signals output from said processor to selected regions of isolated I/O space, for detecting said synchronization events and to produce a data invalidation output signal.

7. The data processor of Claim 6, wherein said logic circuitry further comprises waveshaping logic operable to control set up and hold times for said data invalidation signal.

8. The data processor of Claim 6 or Claim 7, wherein said synchronization detection logic circuitry is implemented external to said processor.

9. A method of implementing cache coherency in a multi-master computer system in which a plurality of asynchronous processes access shared memory and associate with each such access a synchronization event that indicates when valid data is available from said shared memory, and wherein at least a selected one of said processes accesses data entries stored in a cache local to that process, comprising the steps:

monitoring operation of said selected process to detect selected ones of said synchronization events; and

in response to said detection, invalidating at least part of the data entries stored in said local cache;

thereby causing a cache miss to occur in response to subsequent accesses to such invalidated cache data entries.

10. A method of data communication between asynchronous processes in a computer system in which at least one selected process has a process-local buffer storing data entries that can be accessed by said selected process; comprising the steps:

monitoring said selected process to detect communication of selected synchronization events between said selected process and another of said asynchronous processes indicating that valid data is available from memory shared by said asynchronous processes; and

in response to each said detected synchronization event, invalidating at least a portion of the data entries in such process-local buffer.

11. The data communication method of Claim 10, wherein the process-local buffer is a cache.

12. The method of any one of Claims 9-11, wherein said synchronization events include either or both of (a) selected hardware interrupts to said selected process and (b) address outputs from said selected process to access selected regions of I/O space.

13. The method of Claim 12, wherein said memory address information comprises selected bus definition signals, bus control signals, and address signals output from said processor to selected regions of isolated I/O space.

14. The data processor of any of Claims 1, 2 and 5 or the method of Claim 12, wherein said selected regions of I/O space comprise all I/O space locations except non-DMA disk and external coprocessor memory space locations.

15. The data processor of any of Claims 1, 2 and 5 or the method of Claim 12, wherein said selected regions of I/O space comprise memory-mapped I/O space locations.

16. The data processor of any of Claims 1, 2 and 5 or the method of Claim 12, wherein said address outputs comprise read/write address outputs, or read outputs, or write outputs.

17. The data processor or method of any of the preceding claims, wherein said buffer or cache is a write-through cache.

18. The data processor or method of any of the preceding claims, wherein certain ones of said selected synchronization events are programmably selectable.

FIG. 1

EP 0 585 117 A1

*FIG. 2*

FIG. 3

FIG. 4a

FIG. 4b

**European Patent Office**

# EUROPEAN SEARCH REPORT

Application Number

EP 93 30 6752

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-3 845 474 (LANGE ET AL.)<br><br>* column 2, line 45 - line 51 *<br>* column 11, line 38 - column 12, line 5 *<br>--- | 1-6,<br>8-13,<br>15-17 | G06F12/08 |
| X | EP-A-0 377 296 (COMPAQ COMPUTER)<br><br>* column 4, line 2 - line 26 *<br>* column 5, line 33 - column 6, line 39 *<br>----- | 1-3,<br>5-13,<br>15-18 | |
| | | | TECHNICAL FIELDS SEARCHED (Int.Cl.5)<br><br>G06F |

The present search report has been drawn up for all claims

| Place of search | Date of completion of the search | Examiner |
|---|---|---|
| THE HAGUE | 2 December 1993 | Nielsen, O |